# FASCICULE DE BREVET EUROPEEN

(11) **EP 1 729 391 B1**
(45) Date de publication et mention de la délivrance du brevet: **12.08.2015**
(21) Numéro de dépôt: 06114637.9
(22) Date de dépôt: 29.05.2006
(51) Int. Cl.: H02H 7/04, H01F 27/40, H02H 3/02

(54) **Dispositif de détection fusible avec contrôle d'arc pour transformateur auto-protégé**
Sicherungsdetektorschaltung mit Lichtbogenkontrolle für selbstätig geschützte Transformatoren
Fuse detection device with arc control for self-protected transformers

(30) Priorité: 31.05.2005 FR 0551430
(43) Date de publication de la demande: 06.12.2006
(73) Titulaire: Schneider Electric Energy France, 92500 Rueil-Malmaison (FR)
(72) Inventeur: Melquiond, Stéphane, 34400 Villetelle (FR)
(74) Mandataire: Ahner, Philippe

(56) Documents cités:
- EP-A- 0 800 251
- FR-A- 2 801 141
- FR-A- 2 854 725
- US-A- 4 002 949

## Description

L'invention concerne un dispositif de détection fusible de système de protection de transformateur. L'invention concerne également un système de protection de transformateur qui comprend un dispositif de détection fusible selon l'invention.

Les dispositifs de détection fusible actuellement utilisés dans les applications TPC (TPC pour « Transformateur Protection Coupure ») permettent de détecter des surcharges grâce à des micro-fusibles. La détection des surcharges se traduit par l'apparition d'un arc électrique dans le micro-fusible. Les micro-fusibles ne sont pas dimensionnés pour éteindre l'arc électrique qui apparaît lors de la détection.

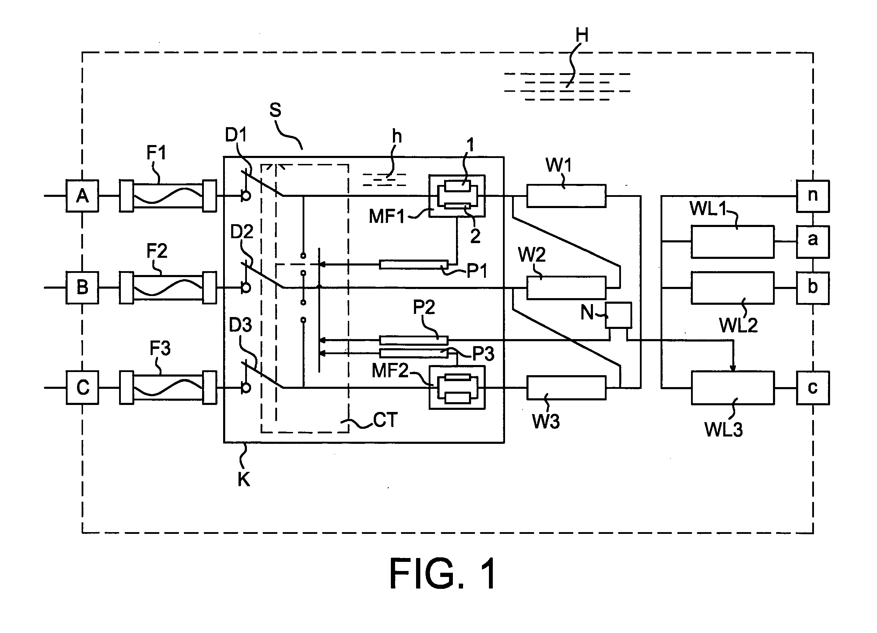

La figure 1 représente, selon l'art connu, un transformateur de distribution triphasé équipé d'un dispositif de protection du transformateur (voir, par exemple, la demande de brevet français publiée sous le numéro 2 801 141). Le transformateur et le dispositif de protection sont tous deux placés dans une cuve qui contient un diélectrique liquide H, par exemple de l'huile.

Le transformateur de distribution triphasé comprend, par exemple, un enroulement haute tension constitué de trois bobines W1, W2, W3 montées en triangle et un enroulement basse tension constitué de trois bobines WL1, WL2, WL3 montées en étoile. L'enroulement basse tension alimente des lignes de phase a, b, c, le point neutre de l'enroulement étant relié à un conducteur neutre n.

Le dispositif de protection comprend trois fusibles haute tension F1, F2, F3, un système S de protection à micro-fusibles et un détecteur N de niveau de diélectrique liquide. Les fusibles haute tension F1, F2, F3 sont reliés aux trois phases haute tension respectives A, B, C.

Le système S de protection à micro-fusibles est constitué d'une cuve K qui contient, dans un diélectrique liquide h, par exemple de l'huile, trois déconnecteurs D1, D2, D3, un système de mise en court-circuit CT, deux dispositifs de détection fusibles MF1, MF2 et trois percuteurs P1, P2, P3.

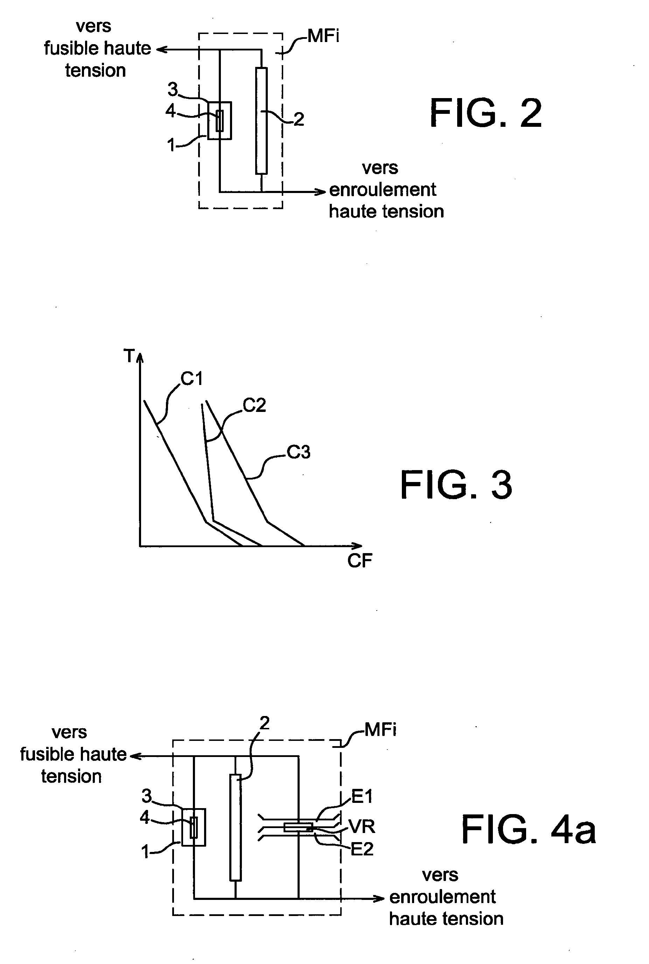

La figure 2 représente une vue de détail d'un dispositif de détection fusible MFi (i=1, 2) selon l'art antérieur. Le dispositif de détection fusible MFi comprend une cartouche fusible 1 et un fil percuteur 2 monté à l'extérieur de la cartouche fusible. La cartouche fusible 1 est du type à fusion dans le sable. Elle est constituée d'une enceinte étanche 3 qui contient un fil micro-fusible 4 placé dans du sable.

Chaque fusible haute tension F1, F2, F3 interrompt franchement le circuit lorsque la valeur d'un courant de défaut qui circule dans la phase qui lui est associée dépasse une valeur dite « intensité de coupure ». Au dessous de l'intensité de coupure, il existe une zone d'intensités critiques des courants de défaut dans laquelle le fusible s'échauffe, se dégrade et n'interrompt pas franchement le circuit. Le système S de protection à micro-fusibles sert à empêcher que les fusibles haute tension F1, F2, F3 ne fonctionnent dans la zone d'intensités critiques mentionnée ci-dessus. A cette fin, les dispositifs de détection fusibles permettent d'obtenir une interruption du circuit pour des courants de défaut dont la valeur est située dans la zone d'intensités critiques.

Les dispositifs de déconnexion D1 et D3 sont montés en série avec les dispositifs fusibles respectifs MF1 et MF2. Chaque dispositif de déconnexion Di (i=1, 2, 3) a une première borne reliée à une première borne du fusible haute tension Fi (i=1, 2, 3). Les deuxièmes bornes des dispositifs de déconnexion D1 et D3 sont reliées aux dispositifs de détection fusibles respectifs MF1 et MF2, la deuxième borne du dispositif de déconnexion D2 étant reliée directement à la bobine W2 de l'enroulement haute tension.

En fonctionnement normal, c'est-à-dire lorsqu'il n'y a pas de courant de défaut, les dispositifs de déconnexion D1, D2, D3 sont dans une position de « connexion », dans laquelle les fusibles haute tension sont électriquement reliés aux enroulements haute tension W1, W2, W3.

Lorsqu'un courant de défaut apparaît sur une quelconque des phases, le fil micro-fusible 4 du dispositif de détection associé à la phase fond et il apparaît un arc électrique qui augmente la tension aux bornes de la cartouche fusible 1. Le courant de défaut est alors dévié dans le fil percuteur 2 qui est monté en parallèle du fil micro-fusible, lequel fil percuteur fond à son tour. La fonte du fil percuteur libère le percuteur qui était, jusque-là, maintenu par un ressort. La libération du percuteur commande, par une action mécanique, la mise en court circuit du dispositif de mise en court-circuit CT. Le dispositif de mise en court-circuit CT met alors en court circuit les trois deuxièmes bornes des dispositifs de déconnexion D1, D2 et D3 et, en conséquence, les trois premières bornes des fusibles haute tension F1, F2, F3. Après un délai nécessaire à la fusion des fusibles haute tension (de 15 à 20 ms), les dispositifs de déconnexion se placent en position « déconnexion ». Les fusibles haute tension ne sont alors plus reliés au système de protection S.

Le détecteur de niveau N complète le dispositif de protection. En cas de baisse de niveau du liquide diélectrique H au dessous d'un certain seuil, le détecteur de niveau N, par exemple un flotteur, détecte la baisse de niveau et un signal de détection de baisse de niveau commande le dispositif de mise en court-circuit CT sous l'action du percuteur P2. Le dispositif de mise en court-circuit CT met alors en court circuit les trois premières bornes des fusibles haute tension, comme mentionné ci-dessus, et les dispositifs de déconnexion se placent ensuite en position « déconnexion ».

Une façon de rendre étanche la cartouche fusible consiste à réaliser un surmoulage qui permet de conserver les propriétés des courbes temps/courant inhérentes à une fusion dans le sable. Pour des courants élevés, l'apparition d'un arc aux bornes de la cartouche fusible 1 peut conduire à un éclatement de cette cartouche. Cet éclatement peut avoir de graves conséquences sur l'environnement. Il peut en effet se produire une cassure du bac K qui enferme le système de protection S. L'arc peut alors s'allonger avec des déplacements non maîtrisables conduisant à une augmentation des énergies mises en jeu et, partant, des pressions développées dans la cuve dans laquelle est placée le transformateur.

A ce jour, les solutions utilisées pour éviter ces problèmes conduisent à limiter l'utilisation des micro-fusibles à des niveaux de courant de court-circuit suffisamment faibles pour qu'une explosion de la cartouche fusible ne se produise pas. Cette solution limite de manière très préjudiciable les niveaux de puissance auxquels les transformateurs peuvent être utilisés.

Il est également connu d'utiliser, à la place d'une cartouche fusible à fusion dans le sable, un fil fusible placé directement dans l'huile, comme cela est divulgué, par exemple, dans le brevet européen EP 0 736 945 A1. Un fil d'argent est alors placé dans la cuve K pour éteindre l'arc. Cette dernière solution présente cependant de réels inconvénients.

En effet, la protection du transformateur triphasé est gouvernée par un principe de sélectivité des protections qui veut que, en cas de défaut, les fusibles basse tension assurent la coupure avant que les fusibles haute tension n'aient commencé à fondre. Ceci permet en effet de limiter à une durée minimale un fonctionnement sans courant du dispositif. Il s'ensuit que, dans le cas d'une application TPC où des micro-fusibles sont présents, les micro-fusibles doivent fonctionner avant les fusibles haute tension et après les fusibles basse tension.

La figure 3 divulgue trois courbes de fusion C1, C2, C3 qui correspondent, respectivement, à un fusible basse tension, à un micro-fusible à fusion dans l'huile et à un fusible haute tension. Chaque courbe de fusion représente le temps de préarc T du fusible en fonction du courant CF qui parcourt le fusible.

Les fusibles haute tension et basse tension sont des fusibles à fusion dans le sable. Les courbes C1 et C3 ont en conséquence des pentes sensiblement identiques. Le choix d'un fusible détecteur à fusion dans l'huile conduit à une courbe de fusion C2 dont la pente diffère très sensiblement de celle des courbes de fusion C1 et C3, conduisant ainsi à fortement éloigner les courbes C1 et C3 l'une de l'autre.

Or, une bonne coordination entre les différents fusibles doit se traduire par une proximité des courbes de fusion. Le dispositif mis en oeuvre dans le brevet EP 0 736 945 ne permet donc pas l'établissement d'une bonne coordination entre les fusibles.

L'invention ne présente pas les inconvénients mentionnés ci-dessus.

### Exposé de l'invention

En effet, l'invention concerne un dispositif de détection fusible de système de protection de transformateur comprenant un micro-fusible contenu dans une enceinte étanche à l'huile et un fil percuteur monté à l'extérieur de l'enceinte, caractérisé en ce qu'il comprend des moyens pour maintenir et limiter en amplitude, pendant une durée donnée, à l'extérieur de l'enceinte et à proximité du micro-fusible, un arc électrique qui se forme après que le micro-fusible et le fil percuteur ont fondu comme suite à l'apparition d'un courant de surcharge dans le micro-fusible.

Selon une autre caractéristique de l'invention, les moyens pour maintenir l'arc électrique à l'extérieur de l'enceinte et à proximité du micro-fusible comprennent, en parallèle du fil percuteur, deux électrodes et une varistance montée en série entre les deux électrodes.

Selon une autre caractéristique de l'invention, les moyens pour maintenir l'arc électrique à l'extérieur de l'enceinte et à proximité du micro-fusible comprennent, en parallèle du fil percuteur, deux électrodes et un fil résistif monté en série entre les deux électrodes.

Selon une autre caractéristique de l'invention, l'enceinte étanche à l'huile dans laquelle est placé le micro-fusible constitue une cartouche fusible à fusion dans le sable ou dans l'air.

L'invention concerne également un système de protection de transformateur de type à micro-fusible comprenant, dans un diélectrique liquide, au moins un dispositif de détection fusible, au moins un percuteur, au moins un déconnecteur et un dispositif de mise en court-circuit pour mettre en court-circuit, sous l'action du percuteur, des bornes de fusibles haute tension, caractérisé en ce que le dispositif de détection fusible est un dispositif selon l'invention dans lequel les moyens pour maintenir l'arc électrique à l'extérieur de l'enceinte et à proximité du micro-fusible sont dimensionnés pour que la durée donnée soit au moins sensiblement égale à la durée nécessaire à la fusion des fusibles haute tension après leur mise en court-circuit.

Il existe, à l'heure actuelle, une demande pour augmenter la puissance des transformateurs à protéger et il faut également, par ailleurs, devancer les demandes de transformateurs TPC fonctionnant, à puissance constante, avec des tensions plus faibles. Dans les deux cas, cela conduit à l'utilisation de calibres de fusibles haute tension plus gros et, en conséquence, à la présence de courants de court-circuit tels que limités par les fusibles haute tension plus importants et d'arcs électriques plus énergétiques. Le dispositif de détection fusible selon l'invention permet avantageusement le contrôle de ces arcs électriques très énergétiques qui, sans cela, conduiraient à de graves dysfonctionnements.

### Brève description des figures

D'autres caractéristiques et avantages de l'invention apparaîtront à la lecture d'un mode de réalisation préférentiel fait en référence aux figures jointes, parmi lesquelles :
- la figure 1 représente un schéma de principe de transformateur de distribution triphasé équipé d'un système de protection à isolation dans un diélectrique liquide de l'art connu ;
- la figure 2 représente un schéma de principe de dispositif de détection fusible de système de protection à isolation dans un diélectrique liquide de l'art connu ;
- la figure 3 représente les courbes de fusion de fusibles de protection d'un système de protection de transformateur selon l'art connu ;
- les figure 4a et 4b représentent, chacune, un schéma de principe de dispositif de détection fusible de système de protection à isolation dans un diélectrique liquide selon l'invention ;
- la figure 5 représente les courbes de fusion de fusibles de protection d'un système de protection de transformateur selon l'invention.

Sur toutes les figures, les mêmes références désignent les mêmes éléments.

### Description détaillée de modes de mise en oeuvre de l'invention

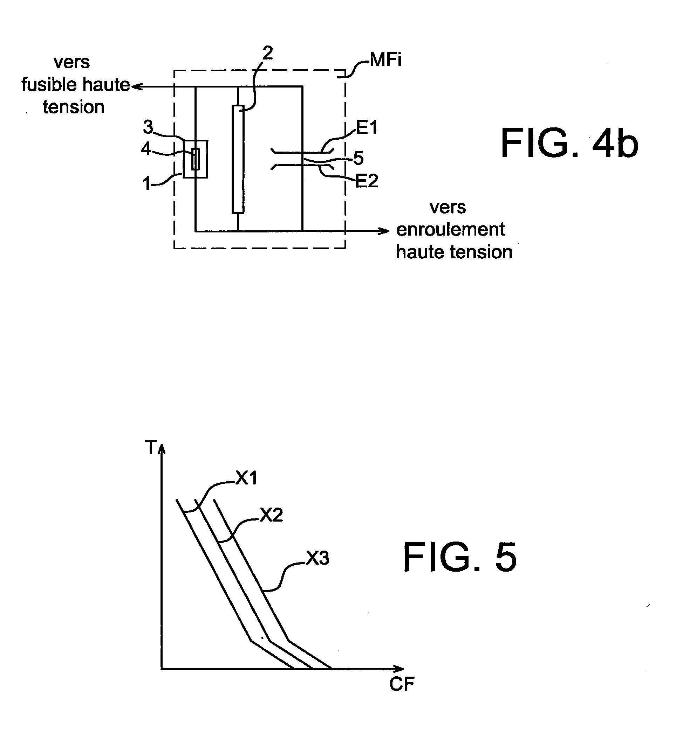

Les figures 4a et 4b représentent, chacune, un schéma de principe de dispositif de détection fusible de système de protection à isolation dans un diélectrique liquide selon l'invention.

En plus des éléments décrits en référence à la figure 2, le dispositif de détection fusible selon l'invention comprend des moyens pour maintenir une localisation de l'arc électrique à l'extérieur de la cartouche micro-fusible lorsque le fil micro-fusible 4 et le fil percuteur 2 ont fondu.

Selon un premier mode de réalisation de l'invention, ces moyens sont constitués de deux électrodes E1, E2 entre lesquelles est placée une varistance VR (cf. figure 4a). Les électrodes E1 et E2 ont préférentiellement des dimensions suffisantes pour encadrer complètement la varistance VR. A titre d'exemple non limitatif, le côté d'une électrode peut être égal à 3 ou 4cm.

Selon un deuxième mode de réalisation de l'invention, ces moyens sont constitués de deux électrodes E1, E2 entre lesquelles un fil fusible résistif est tendu.

Avant l'apparition d'une surcharge, le courant circule pour sa quasi-totalité dans le fil micro-fusible 4 puisque la résistance électrique du fil micro-fusible (quelques mΩ) est faible devant celle du fil percuteur (quelques Ω) et celle de la varistance (quelques MΩ) ou du fil résistif (quelques kΩ).

Une fois la surcharge installée, celle-ci échauffe le fil micro-fusible à l'intérieur de la cartouche fusible 1 jusqu'à fusion de celui-ci. Le courant transite alors dans le fil percuteur 2 qui fond quasi instantanément. La tension aux bornes de la varistance s'élève alors rapidement, entraînant la conduction de celle-ci, puis sa mise en court circuit au-delà d'un certain seuil, la varistance n'étant pas dimensionnée pour ces niveaux d'énergie. Le court-circuit dans la varistance entraîne alors l'apparition d'un arc électrique qui s'initie entre les deux électrodes E1 et E2 qui entourent la varistance. L'arc électrique se maintient entre les deux électrodes pendant toute la durée de la mise en court-circuit opérée par le dispositif de mise en court-circuit CT (par exemple entre 10 et 30ms). Le maintien de l'arc électrique entre les électrodes E1 et E2 permet avantageusement de limiter sa longueur et, partant, son niveau d'énergie pendant le temps nécessaire au dispositif de mise en court-circuit CT pour fonctionner. Une fois la mise en court-circuit effectuée, l'arc s'éteint automatiquement.

C'est la mise en court-circuit de la varistance qui permet d'initier l'arc entre les deux électrodes E1 et E2. Ensuite, les électrodes étant proches, voire très proches, l'une de l'autre (par exemple quelques mm), l'arc se maintient entre elles tant qu'il reste suffisamment de métal. Le dimensionnement des électrodes E1 et E2 dépend de la durée de l'arc et de la valeur des courants de court-circuit mis en jeu limités par les fusibles haute tension (valeur de courant de court-circuit limitée, située, par exemple, entre 1 et 20 kA crête correspondant à des puissances de court-circuit du réseau comprises entre 10 et 63 kA efficaces).

La durée de l'arc est donnée par la durée de la mise en court-circuit et la valeur du courant de court-circuit est donnée par le calibre des fusibles haute tension et la puissance du réseau en amont. Egalement, les électrodes doivent être suffisamment épaisses pour nourrir les pieds de l'arc. En effet, il ne faut pas que les électrodes aient complètement fondues pendant le temps de maintien de l'arc. A titre d'exemple non limitatif, une épaisseur de 0,8mm peut être envisagée. Un choix judicieux de la matière des électrodes peut être, par exemple, le cuivre, le tungstène, ou un alliage de ces deux matières afin de mieux contrôler leur érosion.

Le maintien de l'arc entre les électrodes E1 et E2 permet avantageusement d'empêcher que l'arc ne retourne dans la cartouche fusible 1 et, partant, ne conduise à l'explosion de celle-ci.

La cartouche fusible 1 est préférentiellement du type à fusion dans le sable. Elle peut également être du type à fusion dans l'air.

La figure 5 représente trois courbes de fusion X1, X2, X3 qui correspondent, respectivement, à un fusible basse tension, à un micro-fusible selon l'invention et à un fusible haute tension.

Le dispositif micro-fusible selon l'invention permet avantageusement d'optimiser la coordination entre les fusibles.

En effet, les fusibles haute tension et basse tension étant des fusibles à fusion dans le sable, l'utilisation d'un dispositif de détection fusible à fusion dans le sable permet que la courbe de fusion X2 de ce dispositif s'insère au mieux entre la courbe de fusion X1 des fusibles basse tension et la courbe de fusion X3 des fusibles haute tension. Les courbes de fusion X1, X2 et X3 peuvent alors être très sensiblement rapprochées l'une de l'autre.

La proximité des courbes de fusion X1, X2, X3 permet avantageusement d'utiliser des fusibles haute tension de plus petit calibre que dans l'art antérieur. Les courants de court-circuit limités par ces fusibles de plus petit calibre seront alors plus faibles et le prix des fusibles s'en trouvera avantageusement diminué.

La proximité des courbes de fusion X1, X2 et X3 permet également de travailler avec des fusibles basse tension de plus gros calibre. Il est alors avantageusement possible de distribuer une puissance basse tension plus importante.

## Revendications

1. Dispositif de détection fusible de système de protection de transformateur comprenant un micro-fusible (4) contenu dans une enceinte (3) étanche à l'huile et un fil percuteur (2) monté à l'extérieur de l'enceinte (3), **caractérisé en ce qu'**il comprend des moyens (E1, E2, VR, 5) pour maintenir et limiter en amplitude, pendant une durée donnée, à l'extérieur de l'enceinte et à proximité du micro-fusible, un arc électrique qui se forme après que le micro-fusible (4) et le fil percuteur (2) ont fondu comme suite à l'apparition d'un courant de surcharge dans le micro-fusible (4).

2. Dispositif selon la revendication 1, dans lequel les moyens (E1, E2, VR, 5) pour maintenir l'arc électrique à l'extérieur de l'enceinte et à proximité du micro-fusible comprennent, en parallèle du fil percuteur (2), deux électrodes (E1, E2) et une varistance (VR) montée en série entre les deux électrodes.

3. Dispositif selon la revendication 1, dans lequel les moyens pour maintenir l'arc électrique à l'extérieur de l'enceinte et à proximité du micro-fusible comprennent, en parallèle du fil percuteur (2), deux électrodes (E1, E2) et un fil résistif monté en série entre les deux électrodes.

4. Dispositif selon l'une quelconque des revendications précédentes, dans lequel l'enceinte étanche (3) à l'huile dans laquelle est placé le micro-fusible (4) constitue une cartouche fusible (1) à fusion dans le sable ou dans l'air.

5. Système de protection (S) de transformateur de type à micro-fusible comprenant, dans un diélectrique liquide (h), au moins un dispositif de détection fusible (MFi), au moins un percuteur (Pi), au moins un déconnecteur (Di) et un dispositif de mise en court-circuit (CT) pour mettre en court-circuit, sous l'action du percuteur (Pi), des bornes de fusibles haute tension, **caractérisé en ce que** le dispositif de détection fusible (MFi) est un dispositif selon l'une quelconque des revendications 1 à 4 dans lequel les moyens pour maintenir l'arc électrique à l'extérieur de l'enceinte et à proximité du micro-fusible sont dimensionnés pour que la durée donnée soit au moins sensiblement égale à la durée nécessaire à la fusion des fusibles haute tension après leur mise en court-circuit.

## Patentansprüche

1. Sicherungsdetektorschaltvorrichtung für Transformatorenschutzsysteme, umfassend eine Mikrosicherung (4), die in einem öldichten Gehäuse (3) enthalten ist, und einen Schlagdraht (2), der außerhalb des Gehäuses (3) angeordnet ist, **dadurch gekennzeichnet, dass** sie Mittel (E1, E2, VR, 5) umfasst, um für eine gegebene Zeitdauer einen Lichtbogen, der sich bildet, nachdem die Mikrosicherung (4) und der Schlagdraht (2) in Folge des Auftretens eines Überstroms in der Mikrosicherung (4) geschmolzen sind, außerhalb des Gehäuses und nahe bei der Mikrosicherung zu halten und in der Höhe zu begrenzen.

2. Vorrichtung nach Anspruch 1, wobei die Mittel (E1, E2, VR, 5) zum Halten des Lichtbogens außerhalb des Gehäuses und nahe bei der Mikrosicherung parallel zum Schlagdraht (2) geschaltet zwei Elektroden (E1, E2) und einen Varistor (VR) umfassen, der zwischen die beiden Elektroden in Reihe geschaltet ist.

3. Vorrichtung nach Anspruch 1, wobei die Mittel zum Halten des Lichtbogens außerhalb des Gehäuses und nahe bei der Mikrosicherung parallel zum Schlagdraht (2) geschaltet zwei Elektroden (E1, E2) und einen Widerstandsdraht umfassen, der zwischen die Elektroden in Reihe geschaltet ist.

4. Vorrichtung nach einem der vorangehenden Ansprüche, wobei das öldichte Gehäuse (3), in welchem die Mikrosicherung (4) angeordnet ist, einen in Sand bzw. Luft schmelzbaren Sicherungseinsatz (1) bildet.

5. Transformatorenschutzsystem (S) vom Typ mit Mikrosicherung (4), das in einem flüssigen Dielektrikum (h) zumindest eine Sicherungsdetektorschaltvorrichtung (MFi), zumindest eine Schlagvorrichtung (Pi), zumindest einen Abschalter (Di) und eine Kurzschlussvorrichtung (CT) umfasst, um unter der Wirkung der Schlagvorrichtung (Pi) Hochspannungssicherungsanschlüsse kurzzuschließen, **dadurch gekennzeichnet, dass** die Sicherungsdetektorschaltvorrichtung (MFi) eine Vorrichtung nach einem der Ansprüche 1 bis 4 ist, wobei die Mittel zum Halten des Lichtbogens außerhalb des Gehäuses und nahe bei der Mikrosicherung so bemessen sind, dass die gegebene Zeitdauer zumindest im Wesentlichen gleich der zum Schmelzen der Hochspannungssicherungen nach deren Kurzschließen erforderlichen Zeitdauer ist.

## Claims

1. Detector-fuse device of a transformer protection system, said detector-fuse device comprising a micro-fuse (4) contained in an oil-tight enclosure (3) and a striker wire (2) mounted outside the enclosure (3), **characterized in that** it further comprises means (E1, E2, VR, 5) for sustaining and limiting the amplitude of an electric arc for a given length of time outside the enclosure and in the vicinity of the micro-fuse, said electric arc striking after the micro-fuse (4) and the striker wire (2) have melted consequent upon an overload current appearing in the micro-fuse (4).

2. Device according to claim 1, in which the means (E1, E2, VR, 5) for sustaining the electric arc outside the enclosure and in the vicinity of the micro-fuse comprise, in parallel with the striker wire (2), two electrodes (E1, E2) and a varistor (VR) connected in series between the two electrodes.

3. Device according to claim 1, in which the means for sustaining the electric arc outside the enclosure and in the vicinity of the micro-fuse comprise, in parallel with the striker wire (2), two electrodes (E1, E2) and a resistive wire connected in series between the two electrodes.

4. Device according to any preceding claim, in which the oil-tight enclosure (3) in which the micro-fuse (4) is placed constitutes a fuse cartridge (1) in which fusing takes place in sand or in air.

5. Transformer protection system (S) of the micro-fuse type comprising, in a liquid dielectric (h), at least one detector-fuse device (MFi), at least one striker (Pi), at least one disconnector (Di), and a short-circuiting device (CT) for shorting-circuiting terminals of high-voltage fuses, under action from the striker (Pi), said transformer protection system being **characterized in that** the detector-fuse device (MFi) is a device according to any one of claims 1 to 4, in which the means for sustaining the electric arc outside the enclosure, and in the vicinity of the micro-fuse are dimensioned so that the given length of time is at least substantially equal to the time necessary for the high-voltage fuses to fuse after they have been shortcircuited.
